# EUROPEAN PATENT APPLICATION

(11) **EP 4 773 085 A1**
(43) Date of publication of application: **08.07.2026**
(21) Application number: 24869955.5
(22) Date of filing: 04.07.2024
(51) Int. Cl.: G06T 17/00

(54) **IMAGE RENDERING METHOD AND APPARATUS, AND RELATED DEVICE**

(30) Priority: 28.09.2023 CN 202311287935; 22.12.2023 CN 202311785372
(71) Applicant: Huawei Cloud Computing Technologies Co., Ltd., Gui'an New District, Guizhou 550025 (CN)
(72) Inventor: LI, Xincheng, Guiyang, Guizhou 550025 (CN); JIN, Xin, Guiyang, Guizhou 550025 (CN); ZHAO, Guanyi, Guiyang, Guizhou 550025 (CN)
(74) Representative: Goddar, Heinz J.
(86) International application number: PCT/CN2024/103680
(87) International publication number: WO 2025/066398

(57) **Abstract**

Embodiments of this application disclose an image rendering method and apparatus, and a related device, and belong to the field of computer vision technologies. In embodiments of this application, for any to-be-rendered object, a three-dimensional geometric model and three-dimensional material information of the object are extracted through an implicit object model of the object, an explicit object model of the object is displayed on a frontend interaction interface based on the three-dimensional geometric model and the three-dimensional material information, a display attribute of the explicit object model is edited, and the implicit object model is rendered based on an edited display attribute. In other words, only one implicit object model needs to be obtained, and an image rendering solution in which an implicit object model and an explicit object model are combined can be implemented through the method provided in embodiments of this application, thereby improving editability of an image rendering process and ensuring high realism of a rendering result.

## Description

This application claims priorities to Chinese Patent Application No. 202311287935.8, filed on September 28, 2023 and entitled "RENDERING METHOD AND APPARATUS, AND SYSTEM", and to Chinese Patent Application No. 202311785372.5, filed on December 22, 2023 and entitled "IMAGE RENDERING METHOD AND APPARATUS, AND RELATED DEVICE", both of which are incorporated herein by reference in their entireties.

### TECHNICAL FIELD

Embodiments of this application relate to the field of computer vision technologies, and in particular, to an image rendering method and apparatus, and a related device.

### BACKGROUND

In a computer vision technology, for any to-be-rendered object, a two-dimensional image of the object in a specific viewpoint pose may be rendered based on an implicit object model of the object. However, a process of rendering an image through the implicit object model has low editability. As a result, it is usually difficult for a rendering result to meet a requirement of a user.

### SUMMARY

Embodiments of this application provide an image rendering method and apparatus, and a related device, to improve editability of an image rendering process. Technical solutions are as follows.

According to a first aspect, an image rendering method is provided. The method includes: obtaining a first implicit object model, where the first implicit object model is used to predict an image of a first object from any viewpoint; determining a first three-dimensional geometric model and first three-dimensional material information of the first three-dimensional geometric model based on the first implicit object model, where the first three-dimensional geometric model is a three-dimensional geometric model of the first object; displaying a first explicit object model of the first object on a frontend interaction interface based on the first three-dimensional geometric model and the first three-dimensional material information; determining a display attribute of the first explicit object model on the frontend interaction interface in response to an editing operation performed by a user on the frontend interaction interface; and rendering the first implicit object model based on the display attribute of the first explicit object model on the frontend interaction interface, to obtain at least one first object image.

In the image rendering method provided in this embodiment of this application, for any to-be-rendered object, a three-dimensional geometric model and three-dimensional material information of the object are extracted through an implicit object model of the object, an explicit object model of the object is displayed on a frontend interaction interface based on the three-dimensional geometric model and the three-dimensional material information, a display attribute of the explicit object model is edited, and the implicit object model is rendered based on an edited display attribute. In other words, only one implicit object model needs to be obtained, and an image rendering solution in which an implicit object model and an explicit object model are combined can be implemented through the method provided in embodiments of this application, thereby improving editability of an image rendering process and ensuring high realism of a rendering result.

Based on the method provided in the first aspect, in a possible implementation, a first coordinate conversion relationship may be further determined, where the first coordinate conversion relationship indicates a conversion relationship between an object coordinate system of the first implicit object model and an object coordinate system of the first three-dimensional geometric model. In this scenario, an implementation process of rendering the first implicit object model based on the display attribute of the first explicit object model on the frontend interaction interface may be: rendering the first implicit object model based on the first coordinate conversion relationship and the display attribute of the first explicit object model on the frontend interaction interface.

When the first three-dimensional geometric model and the first three-dimensional material information of the first three-dimensional geometric model are determined based on the first implicit object model, the first coordinate conversion relationship may be further determined, to subsequently perform accurate rendering on the first implicit object model based on the first coordinate conversion relationship.

Based on the method provided in the first aspect, in a possible implementation, a second coordinate conversion relationship may be further determined, where the second coordinate conversion relationship indicates a conversion relationship between an object coordinate system of the first explicit object model and an interface coordinate system of the frontend interaction interface. In this scenario, an implementation process of rendering the first implicit object model based on the display attribute of the first explicit object model on the frontend interaction interface may be: rendering the first implicit object model based on the second coordinate conversion relationship and the display attribute of the first explicit object model on the frontend interaction interface.

Because the determined display attribute of the first explicit object model on the frontend interaction interface refers to a display attribute in the interface coordinate system of the frontend interaction interface, and the interface coordinate system and the object coordinate system of the first explicit object model may not be a same coordinate system, the second coordinate conversion relationship may be further determined, to subsequently perform accurate rendering on the first implicit object model based on the second coordinate conversion relationship.

Based on the method provided in the first aspect, in a possible implementation, an implementation process of determining the first three-dimensional material information of the first three-dimensional geometric model may be: performing, through a texture mapping algorithm, mapping on the first three-dimensional geometric model based on the image of the first object from any viewpoint output by the first implicit object model, to obtain the first three-dimensional material information.

The first three-dimensional material information obtained in the foregoing manner includes a texture value at each location point in the first three-dimensional geometric model, and subsequently, a texture of the object may be directly displayed on the frontend interaction interface based on the texture value. Therefore, the first three-dimensional material information obtained in this manner may also be referred to as explicit material information. The first three-dimensional material information obtained in this manner can improve a speed of subsequently displaying the first explicit object model, that is, can improve efficiency in obtaining the first explicit object model through rendering on the frontend interaction interface.

Based on the method provided in the first aspect, in a possible implementation, an implementation process of determining the first three-dimensional material information of the first three-dimensional geometric model may be: determining a first material model based on the first implicit object model, where the first material model is used to predict a texture of the first object from any viewpoint.

In the foregoing manner, the first material model that can predict a texture of the first object from any viewpoint may be obtained. The first three-dimensional material information obtained in this scenario may also be referred to as implicit material information or a neural material. When the first explicit object model is subsequently displayed through the first material model, realism of the first explicit object model can be improved.

Based on the method provided in the first aspect, in a possible implementation, an implementation process of obtaining the first implicit object model may be: training the first implicit object model based on a plurality of pieces of first sample data, where the plurality of pieces of first sample data indicate imaging information of the first object from a plurality of viewpoints.

In this embodiment of this application, the first implicit object model may be obtained through training based on the sample data, to implement, based on the first implicit object model, the image rendering solution in which the implicit object model and the explicit object model are combined.

Based on the method provided in the first aspect, in a possible implementation, a second implicit object model may be further obtained, where the second implicit object model is used to predict an image of a second object from any viewpoint; a second explicit object model that is of the second object and that is input by the user based on the frontend interaction interface is obtained; the second explicit object model is displayed on the frontend interaction interface; a display attribute of the second explicit object model on the frontend interaction interface is determined in response to an editing operation performed by the user on the frontend interaction interface; the second implicit object model is rendered based on the display attribute of the second explicit object model on the frontend interaction interface, to obtain at least one second object image; and the at least one first object image and the at least one second object image are fused, to obtain panoramic simulation data.

In the image rendering method provided in this embodiment of this application, an explicit object model of an object may be obtained through an implicit object model, or may be directly input by the user, to improve flexibility of this embodiment of this application.

Based on the method provided in the first aspect, in a possible implementation, a third coordinate conversion relationship may be further determined, where the third coordinate conversion relationship indicates a conversion relationship between an object coordinate system of the second implicit object model and an object coordinate system of the second explicit object model. In this scenario, an implementation process of rendering the second implicit object model based on the display attribute of the second explicit object model on the frontend interaction interface, to obtain the at least one second object image may be: rendering the second implicit object model based on the third coordinate conversion relationship and the display attribute of the second explicit object model on the frontend interaction interface.

The object coordinate system of the second explicit object model input by the user and the object coordinate system of the obtained second implicit object model may not be a same coordinate system. Therefore, in this embodiment of this application, the third coordinate conversion relationship may be further determined, to subsequently perform accurate rendering on the second implicit object model based on the third coordinate conversion relationship.

Based on the method provided in the first aspect, in a possible implementation, an implementation process of determining the third coordinate conversion relationship may be: outputting, based on the second implicit object model, at least one image and a pose of the at least one image in the object coordinate system of the second implicit object model; positioning a pose of the at least one image in the object coordinate system of the second explicit object model; and determining the third coordinate conversion relationship based on the pose of the at least one image in the object coordinate system of the second explicit object model and the pose of the at least one image in the object coordinate system of the second implicit object model.

The third coordinate conversion relationship may be determined through poses of a same image in the second explicit object model and the second implicit object model, thereby improving flexibility of this embodiment of this application.

Based on the method provided in the first aspect, in a possible implementation, a fourth coordinate conversion relationship may be further determined, where the fourth coordinate conversion relationship indicates a conversion relationship between the object coordinate system of the second explicit object model and the interface coordinate system of the frontend interaction interface. In this scenario, an implementation process of rendering the second implicit object model based on the display attribute of the second explicit object model on the frontend interaction interface may be: rendering the second implicit object model based on the fourth coordinate conversion relationship and the display attribute of the second explicit object model on the frontend interaction interface.

Because the determined display attribute of the second explicit object model on the frontend interaction interface refers to a display attribute in the interface coordinate system of the frontend interaction interface, and the interface coordinate system and the object coordinate system of the second explicit object model may not be a same coordinate system, the fourth coordinate conversion relationship may be further determined, to subsequently perform accurate rendering on the second implicit object model based on the fourth coordinate conversion relationship.

According to a second aspect, an image rendering apparatus is provided, where the image rendering apparatus has a function of implementing behavior of the image rendering method in the first aspect. The image rendering apparatus includes at least one module, and the at least one module is configured to implement the image rendering method provided in the first aspect.

According to a third aspect, a compute device cluster is provided, including at least one compute device, where each compute device includes a processor and a memory; and the processor of the at least one compute device is configured to execute instructions stored in the memory of the at least one compute device, to cause the compute device cluster to perform the image rendering method provided in the first aspect.

According to a fourth aspect, a computer program product including instructions is provided, where when the instructions are executed by a compute device cluster, the compute device cluster is caused to perform the image rendering method provided in the first aspect.

According to a fifth aspect, a computer-readable storage medium is provided, including computer program instructions, where when the computer program instructions are executed by a compute device cluster, the compute device cluster performs the image rendering method provided in the first aspect.

Technical effects obtained in the second aspect, the third aspect, the fourth aspect, and the fifth aspect are similar to technical effects obtained through corresponding technical means in the first aspect. Details are not described herein again.

### BRIEF DESCRIPTION OF DRAWINGS

FIG. 1 is a diagram of an architecture of an image rendering system according to an embodiment of this application;
FIG. 2 is a diagram of another architecture of the image rendering system shown in FIG. 1 according to an embodiment of this application;
FIG. 3 is a flowchart of an image rendering method according to an embodiment of this application;
FIG. 4 is a flowchart of another image rendering method according to an embodiment of this application;
FIG. 5 is a diagram of a structure of an image rendering apparatus according to an embodiment of this application;
FIG. 6 is a diagram of a structure of a compute device according to an embodiment of this application;
FIG. 7 is a diagram of an architecture of a compute device cluster according to an embodiment of this application; and
FIG. 8 is a diagram of an architecture of another compute device cluster according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before embodiments of this application are explained and described, an application scenario in embodiments of this application is first described.

In scenarios such as autonomous driving simulation, game simulation, augmented reality (augmented reality, AR), and virtual reality (virtual reality, VR), a large quantity of three-dimensional (three-dimensional, 3D) scenarios with rich content and high realism need to be created. In a 3D scenario, methods for representing an object may be classified into an explicit representation and an implicit representation. The explicit representation indicates that information such as geometry, material, and illumination of the object in the scenario is directly provided through a parameter with a physical meaning, that is, an explicit object model of the object is created. The explicit object model may also be referred to as an explicit material. For example, the explicit object model includes a model, for example, a mesh (mesh). In contrast, the implicit representation indicates that information such as a color and a density of the object at a corresponding point in the scenario is provided through a mapping function, that is, an implicit object model of the object is created. The implicit object model may also be referred to as an implicit material. For example, the implicit object model includes a model like a neural radiance field (neural radiance field, NeRF).

Currently, for example, scenario editing systems for making the 3D scenarios may include modeling software like Blender (open-source 3D software), and a game engine like Unity (a real-time content development platform). These scenario editing systems support flexible editing of translation, rotation, and scaling of different objects in the 3D scenarios, but only support editing of the explicit object model. However, the explicit object model has limitations such as modeling precision and a rendering algorithm. As a result, a rendering result is still different from a picture seen by human eyes in a real world, that is, realism of rendering is low.

The implicit object model represented by the NeRF model can provide a very realistic rendering effect. However, the implicit object model cannot be directly edited in the scenario editing systems such as Blender and Unity, that is, editability of a rendering process is low.

Based on this, an embodiment of this application provides an image rendering method. In the image rendering method provided in this embodiment of this application, for any to-be-rendered object, an explicit object model of the object is displayed on a frontend interaction interface through an implicit object model of the object, a display attribute of the explicit object model is edited, and the implicit object model is rendered based on an edited display attribute. In other words, only one implicit object model needs to be obtained, and an image rendering solution in which an implicit object model and an explicit object model are combined can be implemented through the method provided in embodiments of this application, thereby improving editability of an image rendering process and ensuring high realism of a rendering result.

The image rendering method provided in this embodiment of this application may be applied to a cloud scenario, and the cloud scenario may be, for example, an autonomous driving scenario. In this scenario, the image rendering method is performed by a cloud platform, that is, the cloud platform provides a cloud service for a user. The cloud service is used to implement the image rendering method provided in this embodiment of this application. Optionally, the image rendering method provided in this embodiment of this application may alternatively be performed by a terminal device. An application scenario of the image rendering method is not limited in this embodiment of this application.

The following explains and describes an image rendering system provided in an embodiment of this application.

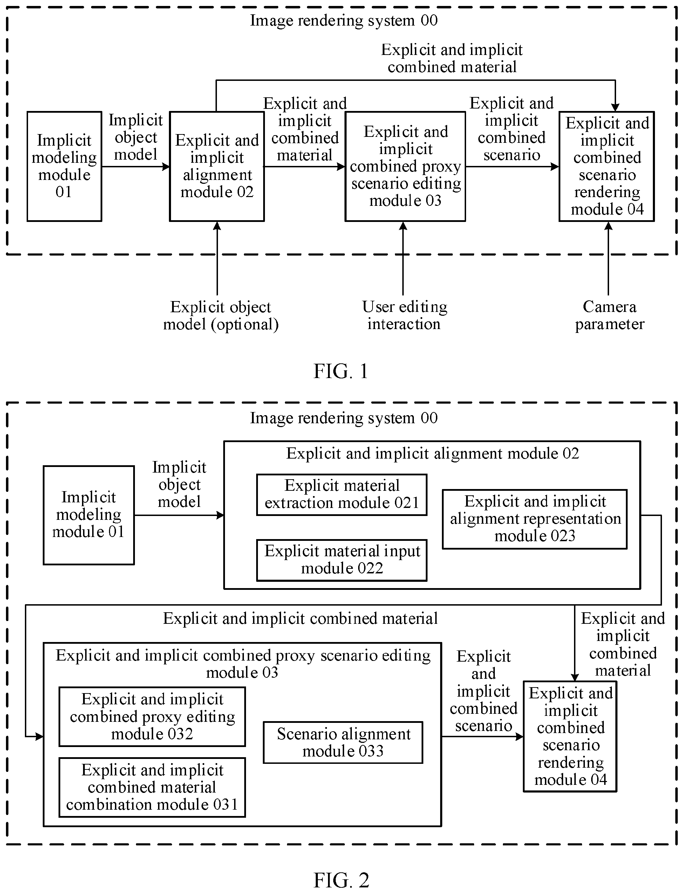

FIG. 1 is a diagram of an architecture of an image rendering system according to an embodiment of this application. As shown in FIG. 1, the image rendering system 00 includes an implicit modeling module 01, an explicit and implicit alignment module 02, an explicit and implicit combined proxy scenario editing module 03, and an explicit and implicit combined scenario rendering module 04.

The implicit modeling module 01 is configured to create an implicit object model of each of one or more objects, and output the implicit object model to the explicit and implicit alignment module 02.

For example, for any to-be-modeled object, a user may provide a plurality of pictures of the object to the implicit modeling module 01, and the implicit modeling module 01 creates an implicit object model of the object based on these pictures. Optionally, in addition to providing the plurality of pictures of the object to the implicit modeling module 01, the user may further provide point cloud information and/or depth information of the object, and the implicit modeling module 01 creates the implicit object model of the object based on the pictures and the point cloud information and/or the depth information.

The implicit modeling module 01 may create the implicit object model through a NeRF, instant neural graphics primitives (instant neural graphics primitives, Instant-NGP), or a technology like differentiable rendering-based reconstruction. Examples are not described one by one herein.

In this embodiment of this application, the to-be-modeled object may be an item (for example, a vehicle or a road obstacle), a person, space (for example, a city street or a high-speed road section), or the like. Examples are not described one by one herein.

The explicit and implicit alignment module 02 is configured to receive the implicit object model of each of the one or more objects that is output by the explicit and implicit alignment module 02, and respectively output an explicit and implicit combined material of each of the one or more objects to the explicit and implicit combined proxy scenario editing module 03 and the explicit and implicit combined scenario rendering module 04.

For example, for any object, the explicit and implicit alignment module 02 may extract a three-dimensional geometric model and three-dimensional material information of the object from an implicit object model, to subsequently display an explicit object model of the object on a frontend interaction interface and align an object coordinate system of the three-dimensional geometric model with an object coordinate system of the implicit object model, thereby jointly forming an explicit and implicit combined material. In this scenario, the explicit and implicit combined material includes the implicit object model, the three-dimensional geometric model and the three-dimensional material information of the object, and a conversion relationship between the object coordinate system of the implicit object model and the object coordinate system of the three-dimensional geometric model.

Aligning the object coordinate system of the three-dimensional geometric model with the object coordinate system of the implicit object model may be understood as: determining the conversion relationship between the two object coordinate systems, where the conversion relationship may include a translation parameter and/or a rotation parameter and/or a scaling parameter.

Optionally, if the user already has an explicit object model that has been modeled in advance of the object, the user may input the explicit object model of the object to the explicit and implicit alignment module 02. In this scenario, the explicit and implicit alignment module 02 may align an object coordinate system of the explicit object model input by the user with an object coordinate system of the implicit object model output by the implicit modeling module 01, to jointly form an explicit and implicit combined material. In this scenario, the explicit and implicit combined material includes the implicit object model, the explicit object model input by the user, and a conversion relationship between the object coordinate systems of the two object models.

The explicit and implicit combined proxy scenario editing module 03 is configured to receive the explicit and implicit combined material of each of the one or more objects that is output by the explicit and implicit alignment module 02, and output an explicit and implicit combined scenario to the explicit and implicit combined scenario rendering module 04.

For example, the explicit and implicit combined proxy scenario editing module 03 may display the explicit object model of each object on the frontend interaction interface. The frontend interaction interface may be an editing interface of a Web technology, for example, Three.js (a three-dimensional engine encapsulated and run based on a native web graphics library (web graphics library, WebGL)) or Babylon.js (an open-source Web 3D rendering engine). The frontend interaction interface may alternatively be an editing interface based on a client technology, for example, Blender (open-source 3D creation software).

The user combines and edits the explicit object models on the frontend interaction interface. After the user combines and edits the explicit object models on the frontend interaction interface, the explicit and implicit combined proxy scenario editing module 03 determines a display attribute of each explicit object model on the frontend interaction interface, where the display attribute includes an attribute, for example, a location, a size, and an orientation of the explicit object model on the frontend interaction interface. The explicit and implicit combined proxy scenario editing module 03 combines the display attribute of each explicit object model and the conversion relationship between the object coordinate system of each explicit object model and an interface coordinate system of the frontend interaction interface into an explicit and implicit combined scenario.

The explicit and implicit combined scenario rendering module 04 is configured to receive the explicit and implicit combined scenario output by the explicit and implicit combined proxy scenario editing module 03 and the explicit and implicit combined material of each of the one or more objects that is output by the explicit and implicit alignment module 02, obtain camera parameter information, and render the implicit object model of each object based on the explicit and implicit combined scenario, the explicit and implicit combined material of each of the one or more objects, and the camera parameter information, to obtain a high-realism image.

For example, the camera parameter information includes a rendering viewpoint pose, and the rendering viewpoint pose may include one viewpoint pose, or may include a plurality of viewpoint poses.

FIG. 2 is a diagram of another architecture of the image rendering system shown in FIG. 1 according to an embodiment of this application.

As shown in FIG. 2, the explicit and implicit alignment module 02 includes an explicit material extraction module 021, an explicit material input module 022, and an explicit and implicit alignment representation module 023.

For any object, the explicit material extraction module 021 is configured to extract a three-dimensional geometric model and three-dimensional material information from the implicit object model of the object. In this embodiment of this application, the three-dimensional material information extracted by the explicit material extraction module 021 may be explicit material information that what you see is what you get, for example, a map. In this scenario, the three-dimensional geometric model and the three-dimensional material information that are extracted from the implicit object model of the object may be referred to as an explicit object model. In other words, in this embodiment of this application, the explicit object model may be directly extracted from the implicit object model.

Optionally, the extracted three-dimensional material information may be implicit material information that what you see is not what you get, for example, a mapping function. In this scenario, the three-dimensional geometric model and the three-dimensional material information that are extracted from the implicit object model of the object may be referred to as an explicit and implicit combined object model. In other words, in this embodiment of this application, the explicit and implicit combined object model may be extracted from the implicit object model.

The explicit material input module 022 is configured to obtain, in response to an operation performed by a user on a frontend interaction interface, an explicit object model input by the user of an object.

The explicit and implicit alignment representation module 023 is configured to align an object coordinate system of the three-dimensional geometric model determined by the explicit material extraction module 021 with an object coordinate system of the implicit object model, or align an object coordinate system of the explicit object model determined by the explicit material input module 022 with the object coordinate system of the implicit object model.

As shown in FIG. 2, the explicit and implicit combined proxy scenario editing module 03 includes an explicit and implicit combined material combination module 031, an explicit and implicit combined proxy editing module 032, and a scenario alignment module 033.

The explicit and implicit combined material combination module 031 is configured to determine, in response to the user adding explicit object models of one or more objects to a scenario of the frontend interaction interface, a location of an explicit object model of each object on the frontend interaction interface, and position a conversion relationship between an object coordinate system of each explicit object model and the interface coordinate system.

The explicit and implicit combined proxy editing module 032 is configured to determine, in response to an editing operation performed by the user on an explicit object model, a display attribute, for example, a location, a size, and an orientation, of the explicit object model, and position a conversion relationship between an object coordinate system of the explicit object model and the interface coordinate system.

The scenario alignment module 033 is configured to integrate the location and the conversion relationship of each explicit object model that are output by the explicit and implicit combined material combination module 031 and the display attribute and the conversion relationship of each explicit object model that are output by the explicit and implicit combined proxy editing module 032, to obtain a scenario combination material, where the scenario combination material includes the display attribute of the explicit object model of each object in the scenario, and the conversion relationship between the object coordinate system of the explicit object model and the interface coordinate system.

It should be noted that, for a same object, when the explicit and implicit combined material combination module 031 outputs a location and a conversion relationship of an explicit object model of the object, and the explicit and implicit combined proxy editing module 032 also outputs a display attribute and the conversion relationship of the explicit object model of the object, the location and the conversion relationship of the explicit object model of the object that are output by the explicit and implicit combined material combination module 031 correspond to operation time of the user, and the display attribute and the conversion relationship of the explicit object model of the object that are output by the explicit and implicit combined proxy editing module 032 also correspond to operation time of the user. Therefore, the scenario alignment module 033 may obtain the location and the conversion relationship of the explicit object model of the object whose operation time of the user is later, as a location and a conversion relationship of the explicit object model of the object in a final scenario combination material.

The foregoing conversion relationship refers to a conversion relationship between the object coordinate system of the explicit object model and the interface coordinate system.

When performing an operation on the frontend interaction interface, the user usually adds an explicit object model of an object to the scenario of the frontend interaction interface through the explicit and implicit combined material combination module 031, and then edits a display attribute of the explicit object model through the explicit and implicit combined proxy editing module 032. In this scenario, a location and a conversion relationship of the explicit object model of the object in the scenario combination material are the location in the display attribute and the conversion relationship that are output by the explicit and implicit combined proxy editing module 032. Optionally, after adding an explicit object model of an object to the scenario of the frontend interaction interface through the explicit and implicit combined material combination module 031, the user may not edit a display attribute of the explicit object model through the explicit and implicit combined proxy editing module 032. In this scenario, a location and a conversion relationship of the explicit object model of the object in the scenario combination material are the location and the conversion relationship that are output by the explicit and implicit combined material combination module 031.

In addition, for example, the scenario combination material may be represented in a format like a graphic library transmission format (graphic library transmission format, glTF) or a universal scene description (universal scene description, USD). This is not limited in this embodiment of this application.

It should be noted that the image rendering system shown in FIG. 2 is used as an example to describe the image rendering system shown in FIG. 1, and does not constitute a limitation on the image rendering system shown in FIG. 1.

In addition, for example, the image rendering system 00 may be a cloud platform. In this scenario, the image rendering system 00 may be implemented by one or more compute devices. The implicit modeling module 01, the explicit and implicit alignment module 02, the explicit and implicit combined proxy scenario editing module 03, the explicit and implicit combined scenario rendering module 04, and another module may be integrated on a same compute device, or may be deployed on different compute devices. This is not limited in this embodiment of this application.

The following explains and describes an image rendering method provided in embodiments of this application.

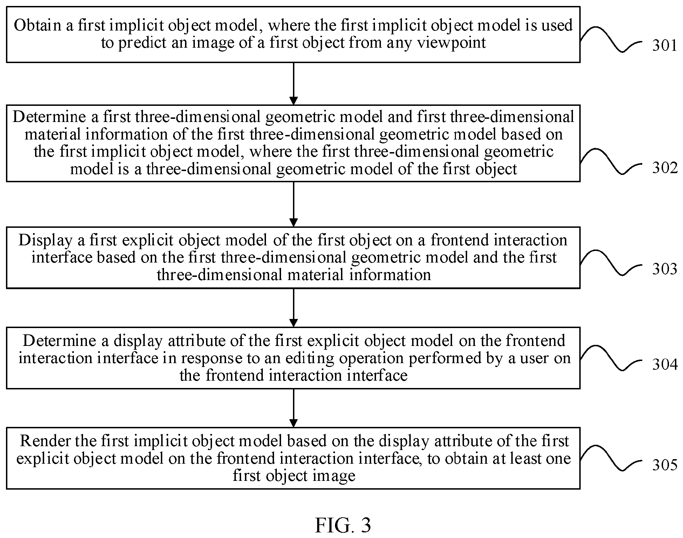

FIG. 3 is a flowchart of an image rendering method according to an embodiment of this application. As shown in FIG. 3, the method includes the following steps.

Step **301.** Obtain a first implicit object model, where the first implicit object model is used to predict an image of a first object from any viewpoint.

In this embodiment of this application, the first implicit object model may be obtained through training based on sample data, to implement, based on the first implicit object model, an image rendering solution in which an implicit object model and an explicit object model are combined. Based on this, in some embodiments, an implementation of obtaining the first implicit object model may be: training the first implicit object model based on a plurality of pieces of first sample data, where the plurality of pieces of first sample data indicate imaging information of the first object from a plurality of viewpoints.

For example, the plurality of pieces of first sample data may include a plurality of pictures collected for the first object. Optionally, the plurality of pieces of first sample data may alternatively include a plurality of pictures collected for the first object, and point cloud information and/or depth information collected for the first object.

The first implicit object model may be a NeRF model. A basic principle of training the NeRF model is as follows: For any object, sample images from different viewpoints are first collected for the object, a camera pose of each sample image is determined, and the sample images and corresponding camera poses are sent as sample data to the NeRF model for training. In this case, a two-dimensional image of the object from any viewpoint may be input to a trained NeRF model.

Optionally, the first implicit object model may be another type of implicit model. A type of the first implicit object model is not limited in this embodiment of this application.

Optionally, in some other embodiments, an implementation of obtaining the first implicit object model may alternatively be: obtaining a first implicit object model input by a user in response to a model input operation performed by the user on the frontend interaction interface. In other words, the first implicit object model may be an implicit object model that has been modeled in advance.

**Step 302.** Determine a first three-dimensional geometric model and first three-dimensional material information of the first three-dimensional geometric model based on the first implicit object model, where the first three-dimensional geometric model is a three-dimensional geometric model of the first object.

The determining the first three-dimensional geometric model based on the first implicit object model may be implemented through a geometric extraction algorithm. For example, the geometric extraction algorithm may be an algorithm like a marching cube (marching cube, MC), or a meshing neural signed distance field (baked signed distance field, BakedSDF) for real-time view synthesis. Examples are not described one by one herein.

**In** some embodiments, an implementation of determining the first three-dimensional material information of the first three-dimensional geometric model may be: performing, through a texture mapping algorithm, mapping on the first three-dimensional geometric model based on the image of the first object from any viewpoint output by the first implicit object model, to obtain the first three-dimensional material information.

The first three-dimensional material information obtained in the foregoing manner includes a texture value at each location point in the first three-dimensional geometric model, and subsequently, a texture of the object may be directly displayed on the frontend interaction interface based on the texture value. Therefore, the first three-dimensional material information obtained in this manner may also be referred to as explicit material information. The first three-dimensional material information obtained in this manner can improve a speed of subsequently displaying a first explicit object model, that is, can improve efficiency in obtaining the first explicit object model through rendering on the frontend interaction interface.

For example, the performing, through the texture mapping algorithm, mapping on the first three-dimensional geometric model based on the image of the first object from any viewpoint output by the first implicit object model may be implemented through steps such as projection mapping, a transformation function, texture sampling, and texture conversion. This is not described in detail in this embodiment of this application.

**In** some other embodiments, an implementation of determining the first three-dimensional material information of the first three-dimensional geometric model may be: determining a first material model based on the first implicit object model, where the first material model is used to predict a texture of the first object from any viewpoint; and the first three-dimensional material information includes the first material model.

**In** the foregoing manner, the first material model that can predict a texture of the first object from any viewpoint may be obtained. The first three-dimensional material information obtained in this scenario may also be referred to as a neural material. When the first explicit object model is subsequently displayed through the first material model, realism of the first explicit object model can be improved.

For example, an implementation of determining the first material model based on the first implicit object model may be: baking the first implicit object model into the first material model through BakedSDF, NeRF2Mesh (a technology for recovering a fine textured mesh from a NeRF through adaptive surface refinement), or the like. This is not described in detail in this embodiment of this application.

The foregoing is used as an example to describe how to obtain the first three-dimensional material information. Optionally, the first three-dimensional material information may alternatively be obtained from the first implicit object model in another manner. Examples are not described one by one herein.

In addition, in some embodiments, when the first three-dimensional geometric model and the first three-dimensional material information of the first three-dimensional geometric model are determined based on the first implicit object model, a first coordinate conversion relationship may be further determined, where the first coordinate conversion relationship indicates a conversion relationship between an object coordinate system of the first implicit object model and an object coordinate system of the first three-dimensional geometric model, to subsequently perform accurate rendering on the first implicit object model based on the conversion relationship between the two object coordinate systems.

For example, because the first three-dimensional geometric model is determined based on the first implicit object model, the object coordinate system of the first three-dimensional geometric model and the object coordinate system of the first implicit object model may be a same coordinate system. In this case, values of parameters such as a translation parameter and a rotation parameter that are in the first coordinate conversion relationship and that indicate the conversion relationship between the object coordinate system of the first implicit object model and the object coordinate system of the first three-dimensional geometric model may be 0, to indicate that the object coordinate system of the first three-dimensional geometric model and the object coordinate system of the first implicit object model are a same coordinate system.

Optionally, in some scenarios, when the first three-dimensional geometric model is constructed based on the first implicit object model, the object coordinate system of the first three-dimensional geometric model and the object coordinate system of the first implicit object model may alternatively be different coordinate systems. In this case, the object coordinate system of the first three-dimensional geometric model and the object coordinate system of the first implicit object model may be converted into a same coordinate system through the first coordinate conversion relationship, to subsequently render the first implicit object model.

Optionally, if the object coordinate system of the first three-dimensional geometric model and the object coordinate system of the first implicit object model are a same coordinate system, the first coordinate conversion relationship may also be recorded. If the first coordinate conversion relationship is not found in a subsequently rendered image, the object coordinate system of the first three-dimensional geometric model and the object coordinate system of the first implicit object model are the same coordinate system by default.

Step 303. Display the first explicit object model of the first object on the frontend interaction interface based on the first three-dimensional geometric model and the first three-dimensional material information.

In this embodiment of this application, to improve high editability of rendering an image through the implicit object model, after the first three-dimensional geometric model and the first three-dimensional material information are obtained through the first implicit object model, the first explicit object model of the first object is displayed on the frontend interaction interface based on the first three-dimensional geometric model and the first three-dimensional material information, so that the user can flexibly edit a display attribute based on the first explicit object model displayed on the frontend interaction interface.

In some embodiments, when the first three-dimensional material information includes the texture value at each location point in the first three-dimensional geometric model, a first three-dimensional geometric model in a default viewpoint pose and a texture value at each location point in the first three-dimensional geometric model in the default viewpoint pose may be directly displayed on the frontend interaction interface, to obtain the first explicit object model. Subsequently, when it is detected that the first explicit object model is rotated, a first three-dimensional geometric model in another viewpoint pose and a texture value at each location point in the first three-dimensional geometric model in the another viewpoint pose are displayed.

In some other embodiments, when the first three-dimensional material information includes the first material model, texture information of the first object in a default viewpoint pose is predicted through the first material model in response to a requirement of displaying the first object on the frontend interaction interface, where the texture information includes a texture value at each location point of the first object in the default viewpoint pose, the first three-dimensional geometric model is displayed based on the default viewpoint pose, and mapping is performed on the first three-dimensional geometric model based on the texture information of the first object, to obtain the first explicit object model. Subsequently, when it is detected that the viewpoint pose changes, texture information of the first object in a changed viewpoint pose is output through the first material model, the first three-dimensional geometric model is displayed based on the changed viewpoint pose, and mapping is performed on the first three-dimensional geometric model based on the texture information of the first object, to obtain a first explicit object model in the changed viewpoint pose. This process may be referred to as obtaining the first explicit object model through real-time rendering by using the first material model.

Step 304. Determine a display attribute of the first explicit object model on the frontend interaction interface in response to an editing operation performed by the user on the frontend interaction interface.

For example, the editing operation performed by the user on the frontend interaction interface may include one or more of operations such as moving, rotating, and scaling. For example, the determined display attribute of the first explicit object model on the frontend interaction interface may include a display size, a display pose, and the like, where the display pose includes a location, an orientation, and the like.

In addition, the display attribute of the first explicit object model on the frontend interaction interface determined in step 304 is a display attribute in an interface coordinate system of the frontend interaction interface, and the interface coordinate system and an object coordinate system of the first explicit object model may not be a same coordinate system. Based on this, in some embodiments, a second coordinate conversion relationship may be further determined in step 304, where the second coordinate conversion relationship indicates a conversion relationship between the object coordinate system of the first explicit object model and the interface coordinate system of the frontend interaction interface, to subsequently perform accurate rendering on the first implicit object model based on the second coordinate conversion relationship.

Optionally, if the object coordinate system of the first explicit object model and the interface coordinate system of the frontend interaction interface are a same coordinate system, the second coordinate conversion relationship may also be determined. In this case, values of parameters such as a translation parameter and a rotation parameter that are in the second coordinate conversion relationship and that indicate the conversion relationship between the object coordinate system of the first explicit object model and the interface coordinate system may be 0, to indicate that the object coordinate system of the first explicit object model and the interface coordinate system are a same coordinate system.

Optionally, if the object coordinate system of the first explicit object model and the interface coordinate system of the frontend interaction interface are a same coordinate system, the second coordinate conversion relationship may also not be recorded. If the second coordinate conversion relationship is not found in a subsequently rendered image, the object coordinate system of the first explicit object model and the interface coordinate system of the frontend interaction interface are the same coordinate system by default.

Step 305. Render the first implicit object model based on the display attribute of the first explicit object model on the frontend interaction interface, to obtain at least one first object image.

In some embodiments, an implementation of rendering the first implicit object model based on the display attribute of the first explicit object model on the frontend interaction interface may be: rendering the first implicit object model based on the first coordinate conversion relationship and the display attribute of the first explicit object model on the frontend interaction interface. The first coordinate conversion relationship indicates the conversion relationship between the object coordinate system of the first implicit object model and the object coordinate system of the first three-dimensional geometric model.

An implementation of rendering the first implicit object model based on the first coordinate conversion relationship and the display attribute of the first explicit object model on the frontend interaction interface may be: determining a display attribute of the first explicit object model in a world coordinate system based on the display attribute of the first explicit object model on the frontend interaction interface, converting the display attribute of the first explicit object model in the world coordinate system into a display attribute of the first implicit object model in the world coordinate system based on the first coordinate conversion relationship, and rendering the first implicit object model based on the display attribute of the first implicit object model in the world coordinate system.

For example, when the interface coordinate system of the frontend interaction interface is the world coordinate system, the display attribute of the first explicit object model on the frontend interaction interface may be directly used as the display attribute of the first explicit object model in the world coordinate system.

Optionally, when the interface coordinate system of the frontend interaction interface is not the world coordinate system, the display attribute of the first explicit object model on the frontend interaction interface needs to be converted into the display attribute of the first explicit object model in the world coordinate system in a coordinate conversion manner. A specific implementation is described in detail subsequently, and details are not described herein.

In some other embodiments, an implementation of rendering the first implicit object model based on the display attribute of the first explicit object model on the frontend interaction interface may be: rendering the first implicit object model based on the second coordinate conversion relationship and the display attribute of the first explicit object model on the frontend interaction interface. The second coordinate conversion relationship indicates the conversion relationship between the object coordinate system of the first explicit object model and the interface coordinate system of the frontend interaction interface.

The rendering the first implicit object model based on the second coordinate conversion relationship and the display attribute of the first explicit object model on the frontend interaction interface may be understood as: converting the display attribute of the first explicit object model on the frontend interaction interface into a display attribute of the first explicit object model in a world coordinate system based on the second coordinate conversion relationship, and rendering the first implicit object model based on the display attribute of the first explicit object model in the world coordinate system.

For example, if the object coordinate system of the first implicit object model and the object coordinate system of the first three-dimensional geometric model that generates the first explicit object model are a same coordinate system, after the display attribute of the first explicit object model in the world coordinate system is determined, the display attribute of the first explicit object model in the world coordinate system may be used as a display attribute of the first implicit object model in the world coordinate system, to render the first implicit object model based on the display attribute of the first implicit object model in the world coordinate system.

For another example, if the object coordinate system of the first implicit object model and the object coordinate system of the first three-dimensional geometric model that generates the first explicit object model are not a same coordinate system, after the display attribute of the first explicit object model in the world coordinate system is determined, the display attribute of the first explicit object model in the world coordinate system may be converted into a display attribute of the first implicit object model in the world coordinate system in a coordinate system conversion manner, to render the first implicit object model based on the display attribute of the first implicit object model in the world coordinate system.

The display attribute of the first implicit object model in the world object coordinate system includes information such as a display size and a display pose. The display attribute and a to-be-rendered viewpoint pose are input to the first implicit object model, and the first implicit object model may output a first object image corresponding to the viewpoint pose.

The viewpoint pose indicates a pose of a rendering camera in the world coordinate system. The first implicit object model may convert the display attribute of the first implicit object model in the world object coordinate system into a display attribute of the first implicit object model in a camera coordinate system of the rendering camera through the viewpoint pose, and the first object image corresponding to the viewpoint pose may be obtained based on the display attribute of the first implicit object model in the camera coordinate system. A specific implementation is not described in detail herein.

It should be noted that the foregoing process of converting the display attribute in different coordinate systems is used as an example for description. In embodiments of this application, the display attribute may alternatively be converted in different coordinate systems in another manner. Examples are not described one by one herein.

In conclusion, in the image rendering method provided in this embodiment of this application, for any to-be-rendered object, a three-dimensional geometric model and three-dimensional material information of the object are extracted through an implicit object model of the object, an explicit object model of the object is displayed on a frontend interaction interface based on the three-dimensional geometric model and the three-dimensional material information, a display attribute of the explicit object model is edited, and the implicit object model is rendered based on an edited display attribute. In other words, only one implicit object model needs to be obtained, and an image rendering solution in which an implicit object model and an explicit object model are combined can be implemented through the method provided in embodiments of this application, thereby improving editability of an image rendering process and ensuring high realism of a rendering result.

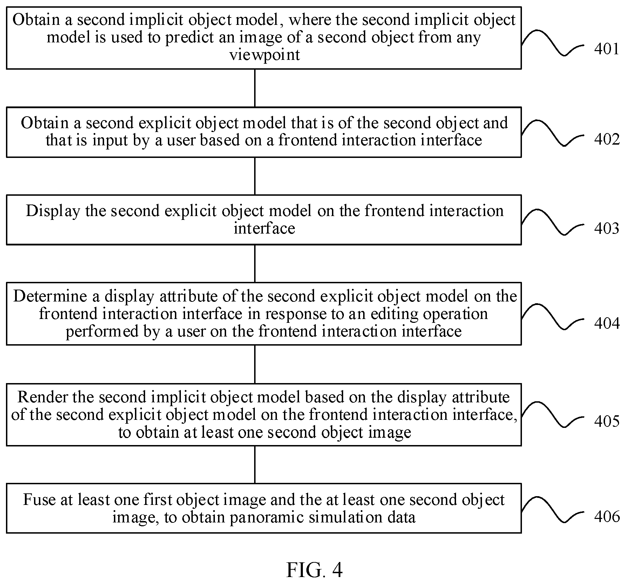

It can be learned from the image rendering systems shown in FIG. 1 and FIG. 2, an explicit object model of an object may be obtained through an implicit object model, or may be directly input by the user, to improve flexibility of this embodiment of this application. Therefore, when the system shown in FIG. 1 or FIG. 2 renders an object in a scenario through the embodiment shown in FIG. 3, the system may further render another object in the scenario through the following embodiment shown in FIG. 4. It should be noted that embodiments shown in FIG. 3 and FIG. 4 may be implemented separately, or may be implemented in combination.

**Step 401.** Obtain a second implicit object model, where the second implicit object model is used to predict an image of a second object from any viewpoint.

For an implementation of step 401, refer to step 301 in the embodiment shown in FIG. 3. Details are not described herein again.

**Step 402.** Obtain a second explicit object model that is of the second object and that is input by a user based on a frontend interaction interface.

The second explicit object model may be a mesh (mesh) model or the like.

An object coordinate system of the second explicit object model input by the user and an object coordinate system of the second implicit object model obtained through step 401 may not be a same coordinate system. Therefore, in some embodiments, a third coordinate conversion relationship may be further determined, where the third coordinate conversion relationship indicates a conversion relationship between the object coordinate system of the second implicit object model and the object coordinate system of the second explicit object model, to subsequently perform accurate rendering on the second implicit object model based on the third coordinate conversion relationship.

For example, an implementation of determining the third coordinate conversion relationship may be: outputting, based on the second implicit object model, at least one image and a pose of the at least one image in the object coordinate system of the second implicit object model; positioning a pose of the at least one image in the object coordinate system of the second explicit object model; and determining the third coordinate conversion relationship based on the pose of the at least one image in the object coordinate system of the second explicit object model and the pose of the at least one image in the object coordinate system of the second implicit object model.

The third coordinate conversion relationship may be determined through poses of a same image in the second explicit object model and the second implicit object model, thereby improving flexibility of this embodiment of this application.

For example, the positioning the pose of the at least one image in the object coordinate system of the second explicit object model may be implemented through a 6 degrees of freedom (degrees of freedom, dof) positioning algorithm. Details are not described herein.

Optionally, in this embodiment of this application, the third coordinate conversion relationship may alternatively be determined in another manner. For example, when inputting the second explicit object model, the user may further manually align the object coordinate system of the second explicit object model with the object coordinate system of the second implicit object model on the frontend interaction interface. The system determines the third coordinate conversion relationship based on operations such as translation, rotation, and scaling in an alignment process. Details are not described herein.

**Step 403.** Display the second explicit object model on the frontend interaction interface.

Because an explicit object model of the second object, that is, the second explicit object model, has been obtained through step 402, the second explicit object model may be directly displayed on the frontend interaction interface.

**Step 404.** Determine a display attribute of the second explicit object model on the frontend interaction interface in response to an editing operation performed by the user on the frontend interaction interface.

For an implementation of step 404, refer to step 304 in the embodiment in FIG. 3. Details are not described herein again.

Similar to step 304, because the determined display attribute of the second explicit object model on the frontend interaction interface refers to a display attribute in an interface coordinate system of the frontend interaction interface, and the interface coordinate system and the object coordinate system of the second explicit object model may not be a same coordinate system, a fourth coordinate conversion relationship may be further determined, to subsequently perform accurate rendering on the second implicit object model based on the fourth coordinate conversion relationship. The fourth coordinate conversion relationship indicates a conversion relationship between the object coordinate system of the second explicit object model and the interface coordinate system of the frontend interaction interface. For a related implementation, refer to step 304 in the embodiment in FIG. 3. Details are not described herein again.

**Step 405.** Render the second implicit object model based on the display attribute of the second explicit object model on the frontend interaction interface, to obtain at least one second object image.

**In** some embodiments, an implementation of rendering the second implicit object model based on the display attribute of the second explicit object model on the frontend interaction interface, to obtain the at least one second object image may be: rendering the second implicit object model based on the third coordinate conversion relationship and the display attribute of the second explicit object model on the frontend interaction interface.

In some other embodiments, an implementation of rendering the second implicit object model based on the display attribute of the second explicit object model on the frontend interaction interface may be: rendering the second implicit object model based on the fourth coordinate conversion relationship and the display attribute of the second explicit object model on the frontend interaction interface.

For the foregoing implementation, refer to step 305 in the embodiment in FIG. 3. Details are not described herein again.

**Step 406.** Fuse at least one first object image and the at least one second object image, to obtain panoramic simulation data.

The at least one first object image is in one-to-one correspondence with at least one viewpoint pose, and the at least one second object image is also in one-to-one correspondence with at least one viewpoint pose. Based on this, in step 406, a first object image and a second object image that correspond to a same viewpoint pose may be respectively fused to obtain at least one frame of panoramic image, and the at least one frame of panoramic image forms the panoramic simulation data.

An implementation of fusing the first object image and the second object image that correspond to the same viewpoint pose is not limited in this embodiment of this application.

In conclusion, in the image rendering method provided in this embodiment of this application, an explicit object model of an object may be obtained through an implicit object model, or may be directly input by the user, to improve flexibility of this embodiment of this application.

The following explains and describes a related apparatus and a device provided in embodiments of this application.

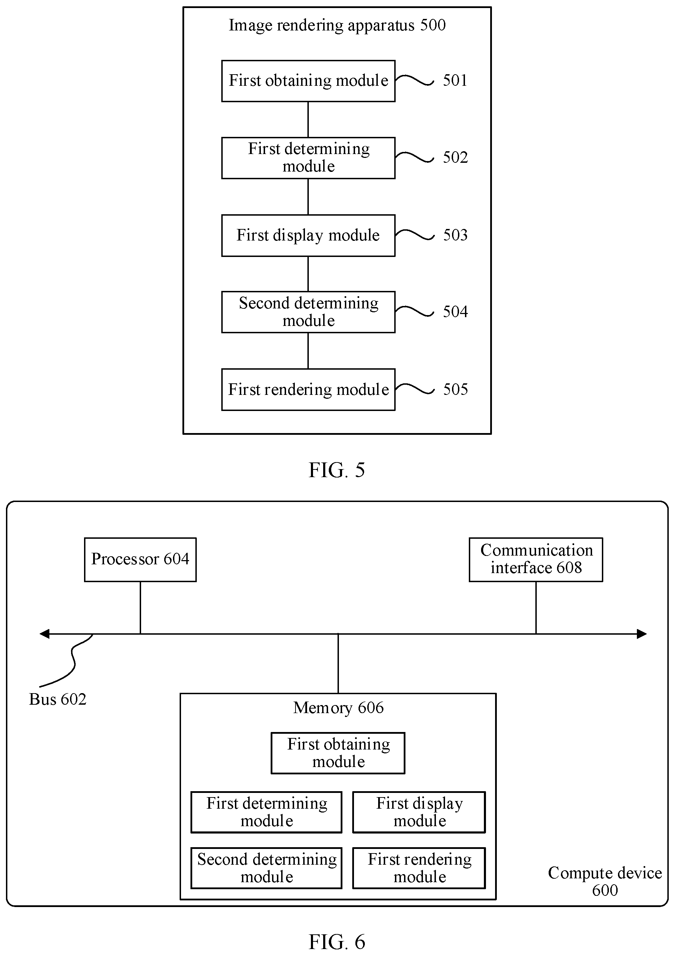

An embodiment of this application further provides an image rendering apparatus. As shown in FIG. 5, the apparatus 500 includes:
a first obtaining module 501, configured to obtain a first implicit object model, where the first implicit object model is used to predict an image of a first object from any viewpoint; and for a specific implementation, refer to step 301 in the embodiment in FIG. 3;
a first determining module 502, configured to determine a first three-dimensional geometric model and first three-dimensional material information of the first three-dimensional geometric model based on the first implicit object model, where the first three-dimensional geometric model is a three-dimensional geometric model of the first object; and for a specific implementation, refer to step 302 in the embodiment in FIG. 3;
a first display module 503, configured to display a first explicit object model of the first object on a frontend interaction interface based on the first three-dimensional geometric model and the first three-dimensional material information; and for a specific implementation, refer to step 303 in the embodiment in FIG. 3;
a second determining module 504, configured to determine a display attribute of the first explicit object model on the frontend interaction interface in response to an editing operation performed by a user on the frontend interaction interface; and for a specific implementation, refer to step 304 in the embodiment in FIG. 3; and
a first rendering module 505, configured to render the first implicit object model based on the display attribute of the first explicit object model on the frontend interaction interface, to obtain at least one first object image; and for a specific implementation, refer to step 305 in the embodiment in FIG. 3.

Optionally, the apparatus further includes:
a third determining module, configured to determine a first coordinate conversion relationship, where the first coordinate conversion relationship indicates a conversion relationship between an object coordinate system of the first implicit object model and an object coordinate system of the first three-dimensional geometric model; and
the first rendering module is configured to:
   render the first implicit object model based on the first coordinate conversion relationship and the display attribute of the first explicit object model on the frontend interaction interface.

Optionally, the apparatus further includes:
a fourth determining module, configured to determine a second coordinate conversion relationship, where the second coordinate conversion relationship indicates a conversion relationship between an object coordinate system of the first explicit object model and an interface coordinate system of the frontend interaction interface; and
the first rendering module is configured to:
   render the first implicit object model based on the second coordinate conversion relationship and the display attribute of the first explicit object model on the frontend interaction interface.

Optionally, the first determining module is configured to:
perform, through a texture mapping algorithm, mapping on the first three-dimensional geometric model based on the image of the first object from any viewpoint output by the first implicit object model, to obtain the first three-dimensional material information.

Optionally, the first determining module is configured to:
determine a first material model based on the first implicit object model, where the first material model is used to predict a texture of the first object from any viewpoint.

Optionally, the first obtaining module is configured to:
train the first implicit object model based on a plurality of pieces of first sample data, where the plurality of pieces of first sample data indicate imaging information of the first object from a plurality of viewpoints.

Optionally, the apparatus further includes:
a second obtaining module, configured to obtain a second implicit object model, where the second implicit object model is used to predict an image of a second object from any viewpoint;
a third obtaining module, configured to obtain a second explicit object model that is of the second object and that is input by the user based on the frontend interaction interface;
a second display module, configured to display the second explicit object model on the frontend interaction interface;
a fifth determining module, configured to determine a display attribute of the second explicit object model on the frontend interaction interface in response to an editing operation performed by the user on the frontend interaction interface;
a second rendering module, configured to render the second implicit object model based on the display attribute of the second explicit object model on the frontend interaction interface, to obtain at least one second object image; and
a fusion module, configured to fuse the at least one first object image and the at least one second object image, to obtain panoramic simulation data.

Optionally, the apparatus further includes:
a sixth determining module, configured to determine a third coordinate conversion relationship, where the third coordinate conversion relationship indicates a conversion relationship between an object coordinate system of the second implicit object model and an object coordinate system of the second explicit object model; and
the second rendering module is configured to:
   render the second implicit object model based on the third coordinate conversion relationship and the display attribute of the second explicit object model on the frontend interaction interface.

Optionally, the sixth determining module is configured to:
output, based on the second implicit object model, at least one image and a pose of the at least one image in the object coordinate system of the second implicit object model;
position a pose of the at least one image in the object coordinate system of the second explicit object model; and
determine the third coordinate conversion relationship based on the pose of the at least one image in the object coordinate system of the second explicit object model and the pose of the at least one image in the object coordinate system of the second implicit object model.

Optionally, the apparatus further includes:
a seventh determining module, configured to determine a fourth coordinate conversion relationship, where the fourth coordinate conversion relationship indicates a conversion relationship between the object coordinate system of the second explicit object model and the interface coordinate system of the frontend interaction interface; and
the second rendering module is configured to:
   render the second implicit object model based on the fourth coordinate conversion relationship and the display attribute of the second explicit object model on the frontend interaction interface.

The first obtaining module 501, the first determining module 502, the first display module 503, the second determining module 504, and the first rendering module 505 may all be implemented through software, or may be implemented through hardware. For example, the following uses the first obtaining module 501 as an example to describe an implementation of the first obtaining module 501. Similarly, for implementations of the first determining module 502, the first display module 503, the second determining module 504, and the first rendering module 505, refer to the first obtaining module 501.

When a module is used as an example of a software functional unit, the first obtaining module 501 may include code that is run on a compute instance. The compute instance may include at least one of a physical host (compute device), a virtual machine, and a container. Further, there may be one or more compute instances. For example, the first obtaining module 501 may include code that is run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions, and interconnection between VPCs is implemented through the communication gateway.

When a module is used as an example of a hardware functional unit, the first obtaining module 501 may include at least one compute device, for example, a server. Alternatively, the first obtaining module 501 may be a device implemented through an application-specific integrated circuit (application-specific integrated circuit, ASIC) or a programmable logic device (programmable logic device, PLD). The PLD may be implemented by a complex programmable logic device (complex programmable logic device, CPLD), a field-programmable gate array (field-programmable gate array, FPGA), generic array logic (generic array logic, GAL), or any combination thereof.

A plurality of compute devices included in the first obtaining module 501 may be distributed in a same region, or may be distributed in different regions. The plurality of compute devices included in the first obtaining module 501 may be distributed in a same AZ, or may be distributed in different AZs. Similarly, the plurality of compute devices included in the first obtaining module 501 may be distributed on a same VPC, or may be distributed on a plurality of VPCs. The plurality of compute devices may be any combination of compute devices such as a server, an ASIC, a PLD, a CPLD, an FPGA, and GAL.

It should be noted that, in another embodiment, the first obtaining module 501 may be configured to perform any step in the image rendering method, the first determining module 502 may be configured to perform any step in the image rendering method, the first display module 503 may be configured to perform any step in the image rendering method, the second determining module 504 may be configured to perform any step in the image rendering method, and the first rendering module 505 may be configured to perform any step in the image rendering method. Steps implemented by the first obtaining module 501, the first determining module 502, the first display module 503, the second determining module 504, and the first rendering module 505 may be specified based on a requirement. The first obtaining module 501, the first determining module 502, the first display module 503, the second determining module 504, and the first rendering module 505 respectively implement different steps in the image rendering method to implement all functions of the image rendering apparatus.

An embodiment of this application further provides a compute device 600. As shown in FIG. 6, the compute device 600 includes a bus 602, a processor 604, a memory 606, and a communication interface 608. The processor 604, the memory 606, and the communication interface 608 communicate with each other through the bus 602. The compute device 600 may be a server or a terminal device. It should be understood that a quantity of processors and a quantity of memories in the compute device 600 are not limited in this application.

The bus 602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented through only one line in FIG. 6. However, it does not indicate that there is only one bus or only one type of bus. The bus 602 may include a path for transmitting information between components (such as the memory 606, the processor 604, and the communication interface 608) of the compute device 600.

The processor 604 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 606 may include a volatile memory (volatile memory), for example, a random access memory (random access memory, RAM). The processor 604 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 606 stores executable program code. The processor 604 executes the executable program code to separately implement functions of the first obtaining module 501, the first determining module 502, the first display module 503, the second determining module 504, and the first rendering module 505, to implement the image rendering method. In other words, the memory 606 stores instructions used to perform the image rendering method.

Alternatively, the memory 606 stores executable code, and the processor 604 executes the executable code to separately implement functions of the image rendering apparatus, to implement the image rendering method. In other words, the memory 606 stores instructions used to perform the image rendering method.

The communication interface 608 uses a transceiver module, for example, but not limited to, a network interface card or a transceiver, to implement communication between the compute device 600 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

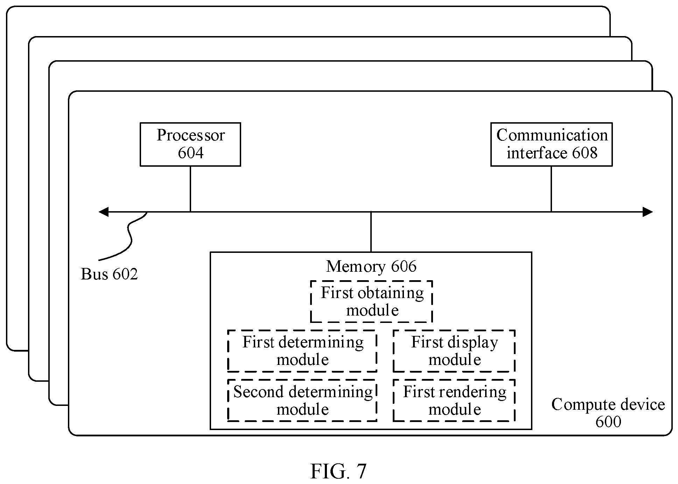

As shown in FIG. 7, the compute device cluster includes at least one compute device 600. A memory 606 in the one or more compute devices 600 in the compute device cluster may store same instructions used to perform the image rendering method.

In some possible implementations, the memory 606 in the one or more compute devices 600 in the compute device cluster may also separately store some instructions used to perform the image rendering method. In other words, a combination of the one or more compute devices 600 may jointly execute the instructions used to perform the image rendering method.

It should be noted that memories 606 in different compute devices 600 in the compute device cluster may store different instructions, and the different instructions are respectively used to perform some functions of the image rendering apparatus. That is, the instructions stored in the memories 606 in different compute devices 600 may implement functions of one or more of the first obtaining module 501, the first determining module 502, the first display module 503, the second determining module 504, and the first rendering module 505.

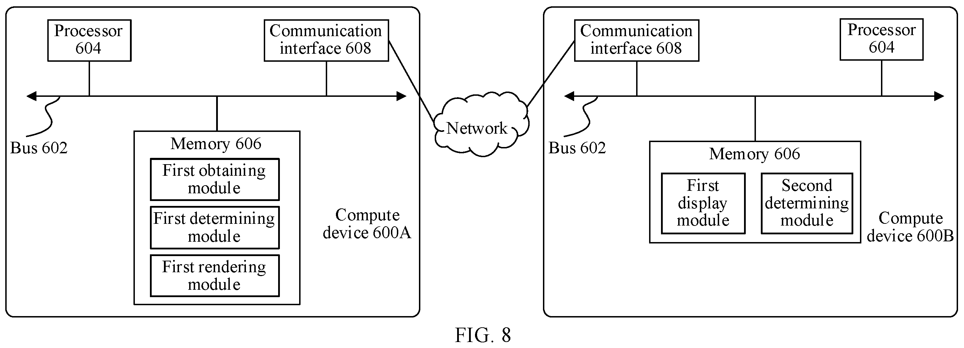

In some possible implementations, the one or more compute devices in the compute device cluster may be connected through a network. The network may be a wide area network, a local area network, or the like. FIG. 8 shows a possible implementation. As shown in FIG. 8, two compute devices 600A and 600B are connected through a network. Specifically, each compute device is connected to the network through a communication interface in the compute device. In this possible implementation, a memory 606 in the compute device 600A stores instructions for executing functions of the first obtaining module 501, the first determining module 502, and the first rendering module 505. In addition, a memory 606 in the compute device 600B stores instructions for executing functions of the first display module 503 and the second determining module 504.

A connection manner between compute device clusters shown in FIG. 8 may be that, considering that the image rendering method provided in this application needs to interact with a user, and a large amount of computing is required in a background, it is considered that the functions implemented by the first obtaining module 501, the first determining module 502, and the first rendering module 505 are performed by the compute device 600A, and the functions implemented by the first display module 503 and the second determining module 504 are performed by the compute device 600B.

It should be understood that, a function of the compute device 600A shown in FIG. 8 may alternatively be completed by a plurality of compute devices 600. Similarly, a function of the compute device 600B may alternatively be completed by a plurality of compute devices 600.

An embodiment of this application further provides a computer program product including instructions. The computer program product may be software or a program product that includes instructions and that can be run on a compute device or can be stored in any usable medium. When the computer program product is run on at least one compute device, the at least one compute device is caused to perform the image rendering method.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions indicate a compute device to perform the image rendering method.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof. However, these modifications or replacements do not make the essence of the corresponding technical solutions depart from the protection scope of the technical solutions of embodiments of this application.

## Claims

1. An image rendering method, wherein the method comprises:
obtaining a first implicit object model, wherein the first implicit object model is used to predict an image of a first object from any viewpoint;
determining a first three-dimensional geometric model and first three-dimensional material information of the first three-dimensional geometric model based on the first implicit object model, wherein the first three-dimensional geometric model is a three-dimensional geometric model of the first object;
displaying a first explicit object model of the first object on a frontend interaction interface based on the first three-dimensional geometric model and the first three-dimensional material information;
determining a display attribute of the first explicit object model on the frontend interaction interface in response to an editing operation performed by a user on the frontend interaction interface; and
rendering the first implicit object model based on the display attribute of the first explicit object model on the frontend interaction interface, to obtain at least one first object image.

2. The method according to claim 1, wherein the method further comprises:
determining a first coordinate conversion relationship, wherein the first coordinate conversion relationship indicates a conversion relationship between an object coordinate system of the first implicit object model and an object coordinate system of the first three-dimensional geometric model; and
the rendering the first implicit object model based on the display attribute of the first explicit object model on the frontend interaction interface comprises:
rendering the first implicit object model based on the first coordinate conversion relationship and the display attribute of the first explicit object model on the frontend interaction interface.

3. The method according to claim 1 or 2, wherein the method further comprises:
determining a second coordinate conversion relationship, wherein the second coordinate conversion relationship indicates a conversion relationship between an object coordinate system of the first explicit object model and an interface coordinate system of the frontend interaction interface; and
the rendering the first implicit object model based on the display attribute of the first explicit object model on the frontend interaction interface comprises:
rendering the first implicit object model based on the second coordinate conversion relationship and the display attribute of the first explicit object model on the frontend interaction interface.

4. The method according to any one of claims 1 to 3, wherein the determining the first three-dimensional material information of the first three-dimensional geometric model comprises:
performing, through a texture mapping algorithm, mapping on the first three-dimensional geometric model based on the image of the first object from any viewpoint output by the first implicit object model, to obtain the first three-dimensional material information.

5. The method according to any one of claims 1 to 3, wherein the first three-dimensional material information comprises a first material model, and the determining the first three-dimensional material information of the first three-dimensional geometric model comprises:
determining the first material model based on the first implicit object model, wherein the first material model is used to predict a texture of the first object from any viewpoint.

6. The method according to any one of claims 1 to 5, wherein the obtaining the first implicit object model comprises:
training the first implicit object model based on a plurality of pieces of first sample data, wherein the plurality of pieces of first sample data indicate imaging information of the first object from a plurality of viewpoints.

7. The method according to any one of claims 1 to 6, wherein the method further comprises:
obtaining a second implicit object model, wherein the second implicit object model is used to predict an image of a second object from any viewpoint;
obtaining a second explicit object model that is of the second object and that is input by the user based on the frontend interaction interface;
displaying the second explicit object model on the frontend interaction interface;
determining a display attribute of the second explicit object model on the frontend interaction interface in response to an editing operation performed by the user on the frontend interaction interface;
rendering the second implicit object model based on the display attribute of the second explicit object model on the frontend interaction interface, to obtain at least one second object image; and
fusing the at least one first object image and the at least one second object image, to obtain panoramic simulation data.

8. The method according to claim 7, wherein the method further comprises:
determining a third coordinate conversion relationship, wherein the third coordinate conversion relationship indicates a conversion relationship between an object coordinate system of the second implicit object model and an object coordinate system of the second explicit object model; and
the rendering the second implicit object model based on the display attribute of the second explicit object model on the frontend interaction interface, to obtain the at least one second object image comprises:
rendering the second implicit object model based on the third coordinate conversion relationship and the display attribute of the second explicit object model on the frontend interaction interface.

9. The method according to claim 8, wherein the determining the third coordinate conversion relationship comprises:
outputting, based on the second implicit object model, at least one image and a pose of the at least one image in the object coordinate system of the second implicit object model;
positioning a pose of the at least one image in the object coordinate system of the second explicit object model; and
determining the third coordinate conversion relationship based on the pose of the at least one image in the object coordinate system of the second explicit object model and the pose of the at least one image in the object coordinate system of the second implicit object model.

10. The method according to any one of claims 7 to 9, wherein the method further comprises:
determining a fourth coordinate conversion relationship, wherein the fourth coordinate conversion relationship indicates a conversion relationship between the object coordinate system of the second explicit object model and the interface coordinate system of the frontend interaction interface; and
the rendering the second implicit object model based on the display attribute of the second explicit object model on the frontend interaction interface comprises:
rendering the second implicit object model based on the fourth coordinate conversion relationship and the display attribute of the second explicit object model on the frontend interaction interface.

11. An image rendering apparatus, wherein the apparatus comprises:
a first obtaining module, configured to obtain a first implicit object model, wherein the first implicit object model is used to predict an image of a first object from any viewpoint;
a first determining module, configured to determine a first three-dimensional geometric model and first three-dimensional material information of the first three-dimensional geometric model based on the first implicit object model, wherein the first three-dimensional geometric model is a three-dimensional geometric model of the first object;
a first display module, configured to display a first explicit object model of the first object on a frontend interaction interface based on the first three-dimensional geometric model and the first three-dimensional material information;
a second determining module, configured to determine a display attribute of the first explicit object model on the frontend interaction interface in response to an editing operation performed by a user on the frontend interaction interface; and
a first rendering module, configured to render the first implicit object model based on the display attribute of the first explicit object model on the frontend interaction interface, to obtain at least one first object image.

12. The apparatus according to claim 11, wherein the apparatus further comprises:
a third determining module, configured to determine a first coordinate conversion relationship, wherein the first coordinate conversion relationship indicates a conversion relationship between an object coordinate system of the first implicit object model and an object coordinate system of the first three-dimensional geometric model; and
the first rendering module is configured to:
render the first implicit object model based on the first coordinate conversion relationship and the display attribute of the first explicit object model on the frontend interaction interface.

13. The apparatus according to claim 11 or 12, wherein the apparatus further comprises:
a fourth determining module, configured to determine a second coordinate conversion relationship, wherein the second coordinate conversion relationship indicates a conversion relationship between an object coordinate system of the first explicit object model and an interface coordinate system of the frontend interaction interface; and
the first rendering module is configured to:
render the first implicit object model based on the second coordinate conversion relationship and the display attribute of the first explicit object model on the frontend interaction interface.

14. The apparatus according to any one of claims 11 to 13, wherein the first determining module is configured to:
perform, through a texture mapping algorithm, mapping on the first three-dimensional geometric model based on the image of the first object from any viewpoint output by the first implicit object model, to obtain the first three-dimensional material information.

15. The apparatus according to any one of claims 11 to 13, wherein the first determining module is configured to:
determine the first material model based on the first implicit object model, wherein the first material model is used to predict a texture of the first object from any viewpoint.

16. The apparatus according to any one of claims 11 to 15, wherein the first obtaining module is configured to:
train the first implicit object model based on a plurality of pieces of first sample data, wherein the plurality of pieces of first sample data indicate imaging information of the first object from a plurality of viewpoints.

17. The apparatus according to any one of claims 11 to 16, wherein the apparatus further comprises:
a second obtaining module, configured to obtain a second implicit object model, wherein the second implicit object model is used to predict an image of a second object from any viewpoint;
a third obtaining module, configured to obtain a second explicit object model that is of the second object and that is input by the user based on the frontend interaction interface;
a second display module, configured to display the second explicit object model on the frontend interaction interface;
a fifth determining module, configured to determine a display attribute of the second explicit object model on the frontend interaction interface in response to an editing operation performed by the user on the frontend interaction interface;
a second rendering module, configured to render the second implicit object model based on the display attribute of the second explicit object model on the frontend interaction interface, to obtain at least one second object image; and
a fusion module, configured to fuse the at least one first object image and the at least one second object image, to obtain panoramic simulation data.

18. The apparatus according to claim 17, wherein the apparatus further comprises:
a sixth determining module, configured to determine a third coordinate conversion relationship, wherein the third coordinate conversion relationship indicates a conversion relationship between an object coordinate system of the second implicit object model and an object coordinate system of the second explicit object model; and
the second rendering module is configured to:
render the second implicit object model based on the third coordinate conversion relationship and the display attribute of the second explicit object model on the frontend interaction interface.

19. The apparatus according to claim 18, wherein the sixth determining module is configured to:
output, based on the second implicit object model, at least one image and a pose of the at least one image in the object coordinate system of the second implicit object model;
position a pose of the at least one image in the object coordinate system of the second explicit object model; and
determine the third coordinate conversion relationship based on the pose of the at least one image in the object coordinate system of the second explicit object model and the pose of the at least one image in the object coordinate system of the second implicit object model.

20. The apparatus according to any one of claims 17 to 19, wherein the apparatus further comprises:
a seventh determining module, configured to determine a fourth coordinate conversion relationship, wherein the fourth coordinate conversion relationship indicates a conversion relationship between the object coordinate system of the second explicit object model and the interface coordinate system of the frontend interaction interface; and
the second rendering module is configured to:
render the second implicit object model based on the fourth coordinate conversion relationship and the display attribute of the second explicit object model on the frontend interaction interface.

21. A compute device cluster, comprising at least one compute device, wherein each compute device comprises a processor and a memory; and
the processor of the at least one compute device is configured to execute instructions stored in the memory of the at least one compute device, to cause the compute device cluster to perform the method according to any one of claims 1 to 10.

22. A computer program product comprising instructions, wherein when the instructions are executed by a compute device cluster, the compute device cluster is caused to perform the method according to any one of claims 1 to 10.

23. A computer-readable storage medium, comprising computer program instructions, wherein when the computer program instructions are executed by a compute device cluster, the compute device cluster performs the method according to any one of claims 1 to 10.
